# EUROPEAN PATENT APPLICATION

(11) **EP 1 468 738 A1**
(43) Date of publication of application: **20.10.2004**
(21) Application number: 00981949.1
(22) Date of filing: 08.09.2000
(51) Int. Cl.: B02B 1/00, A21D 13/02, A21B 7/00, B02C 18/30, A23L 1/10

(54) **METHOD FOR PRODUCING GRAIN SUBSTANCE, A SET OF EQUIPMENT FOR PRODUCING SAID SUBSTANCE AND GRAIN BREAKING MACHINE**

(30) Priority: 04.09.2000 RU 2000122913
(71) Applicant: Lebendiges Brot GmbH, 50259 Pulheim (DE)
(72) Inventor: KALNISH, Grigory Izeslavovich, Tver, 170000 (RU); ANTONOV, Vladimir Mikhailovich, Krasnoyarsk, 660036 (RU); EVSTIGNEEV, Boris Konstantinovich, Tver, 170000 (RU)
(74) Representative: Manasse, Uwe, Dr.
(86) International application number: PCT/RU2000/000360
(87) International publication number: WO 2002/022268

(57) **Abstract**

The invention relates to the food industry. The inventive method for producing a grain substance consists in the following: mellow grain having an undamaged membrane and a hyaline layer is husked with the aid of a husker (5) in such a way that a part of external layer of kernel seed coat of a grain is removed in a quantity which is equal to 5 % of the initial weight of the grain, the integrity of the hyaline layer of the seed coat being preserved. The cleaning of the grain is carried out with the aid of current water in a device (7) for cleaning grain from impurities and in a device (6) for washing the grain surface of a module (1) for surface cleaning . The cleaned grain is germinated in receptacles (40) of a module (2) for grain germination by flooding the grain with a liquid and supplying air thereto with the aid of a perforated tube (43) of an air supply system.

## Description

### FIELD OF INVENTION

The present invention relates to food industry, and, in particular, to food production, for instance, of pasta products, bread, including bakery goods such as burger buns, baguettes (French long or short loaves), bread sticks, pettes (unleavened flat cake, also used as pizza foundation), ring-shaped cracker, croissants, gingerbread, etc. from whole grain at the initial stage of germination, called as "germinated grain".

### BACKGROUND OF THE INVENTION

The main problem preventing from the widely spread use of germinated grain being the most valuable natural bio-product, used as a basis for production of the widely spread food products for human consumption such as bread and bakery goods, pasta products etc, consists in complexity of production of grain mass, firstly with specified properties, secondly, the grain mass that, from the one hand, secures commercial production of the above mentioned products, and on the other hand, allows to avoid unpleasant feelings from crude food. A stable achievement of the specific properties of the grain mass and fine grinding of germinated grain in conventional ways and on the conventional machinery cause great troubles especially in the commercial production of the end product, i.e. 5-10 t per day and more for bakery goods and 50-100t per day and more for pasta products that accordingly require big volumes of grain mass.

There is a known method of producing of grain mass wherein cleaned wheat grains are pre-soaked in water and the soaked wheat grains are then milled to produce a grain mass (USSR Patent No. 1837778, MPK A 21 D 13/02, 1993 (analogue)).

There is a known method of producing of a grain mass providing for the surface cleaning of grains by means of a husker with preservation of the germ, soaking of the cleaned grains in water at 8-40° C for 5-24 hours and their milling to produce a grain mass (USSR Certificate of Authorship No. 1214054, MPK A 21 D/13/02, 1986 (analogue)).

There is a known method of producing of grain mass wherein a pre-soaked cleaned grain with the preserved germ is submerged into an aquatic environment in the proportion of no less than 0,6 1 per 1 kg of grain until oxidation of the aquatic environment of 2-12 degrees and swelling degree of the grain that is characterized by the ability of grain to get flattened during squeezing and with the leaping out of the untouched germ, then the aquatic environment wherein the grain has been submerged is removed, and the wet grain is finely milled with the removing of a liquid fraction that is not bound with the produced wet grain mass (RU Patent No. 2134511, MPK A 21 D 13/02, 2/38, 1999, (analogue)).

The closest from the technical point of view to the declared method is the method of producing of a grain mass providing for surface cleaning of grain with running water, soaking of it in water with a temperature of 15-20° C for 18-24 hours, wherein while stirring the grain the water is removed for 3-6 times, spreading out of the swollen grain in a layer no more than 5 cm thick and germinating of it for 22-26 hours at a temperature of 18-25° C, moreover the grain is rinsed and stirred for no less than four times, and then is milled to the size of particles of 0,5-1,0 mm (RU Patent No. 2101959, MPK A 21 D 13/02, 1998 (prototype)).

The known methods of producing of a grain mass allow to obtain the given biochemical condition of soaked grain based on the total weigh of grain in small batches only and are absolutely non-acceptable in producing of the end products, for instance grain bread, with higher nutritional and biological value, and organoleptic properties in the commercial volumes, for instance from 10 and more per day.

There is a known set of equipment for producing of a grain mass comprising of a module for surface cleaning designed as a husker and a module for grinding (Ivanov G.V. Flourless bread "Tonus" is a source of health and long life// All over the country, 1998, no. 17 (156), p.32 (analogue)).

A disadvantage of the known set of equipment is that manufacturability of a grain mass with the given properties is limited because of imperfectness of the equipment used.

There is a known set of equipment comprising of a module for surface cleaning designed as a damper, a husker and a water remover fixed between them, whereas the latter is designed as a tank with water-proof walls, wherein between inlets and outlets there is a driving conveyor (RU Invention Application No. 95107490, MPK 6 B2B1/06, 1996 (analogue)).

A disadvantage of the known set of equipment is that manufacturability of a grain mass with the given properties is limited because of imperfectness of the equipment used.

The closest to the declared set of equipment from the technical point of view is a set of equipment for producing of a grain mass comprising of a module for surface cleaning that according to the technological process is designed as successively placed device for surface cleaning of grain and a unit for removal of impurities, designed as a hydrodynamic classifier, soaking tanks and a module for grinding of grain accomplished as a grinder (RU Invention Application No. 96105314, MPK 6 A 21 B 7/00, A 21 D 13/02, B02B 1/04, 1998 (prototype)).

A disadvantage of the known set of equipment is that manufacturability of grain mass with the given properties is limited because of imperfectness of the equipment used.

There is a known grinder comprising of a case with a surge bin and a feed screw on the stem that is eccentric to its longitudinal axis there are blade knives, the opposite sides of which are faced to the corresponding grids and with a formation of gap grids narrowing towards the line of their contact (RU Patent No. 2121399, B 02 C 18/30, 1998 (analogue)).

A disadvantage of the known grinder is that its constructional features cause intensive misbalance of the rotor, fast heating of bearing of the screw as well as the screw itself and the produced grain mass, and also dispersion increase for the knife wear, and an erratic operation of the system, in general, that is negatively tells either on the nutritional value as well as on the organoleptic properties of the finished product.

The closest to the declared method by essential features is a grinder comprising of a case with a loading chamber, a feed screw and a grinding device including grids and blade pressure knives in between, fixed on the shaft of the feed screw, while the opposite blade surfaces are flat and faced to the corresponding grids with a formation of gap grids narrowing towards the line of their contact. Skew surface of the pressure knife blade can be made as_plane, inclination angle of which makes 1-45 degrees to the plane of die-plate (RU Patent No. 2053599, B02C 18/30, 1996 (prototype)).

A disadvantage of the known solution is a decreased dispersion for a fast knife wear, and also erratic operation of the system, in general, is negatively tells on the nutritional value as well as on the organoleptic properties of the finished product.

### SUMMARY OF THE INVENTION

It is the main object of the invention to develop a method and design a set of equipment for producing of a grain mass to attain a compound technical result, namely producing of a grain mass from the germinated grain enough for the commercial production with the given from batch to batch consistent properties, with higher nutritional and biological values and high organoleptic properties of the finished product produced.

Higher nutritional and biological values is a compound index including:
- higher content of protein in the finished product and a natural balancing of its amino-acid content;
- higher assimilability of vitamins and microelements that are mainly bound in the germ or a shell part of grain kernel and released while germination;
- Higher content of food fiber and its improved quality that is provided by biochemical processes of splitting and synthesis of cells at the initial germination stage and activization of the germ.

High organoleptic properties produced from grain mass of the finished product are achieved by a necessary residual gluten content in the germinated grain, as well as by the quality of the grain mass including and defining by fine dispersion of grain mass, proper pre-cleaning of grain shell prior to germination etc.

High organoleptic properties include high porosity, a zero-defect of form, nice taste and flavor of bread, gold-like crust, crumb elasticity and the like.

Attainment of the compound index when preserving of the required gluten content and providing of fine dispersion of the grain mass, defines specified properties of the grain mass.

For many years a lot of specialists were unable to find a solution to invent a method and design a set of equipment that in working conditions allow stable production of a grain mass from germinated grain, with the specified quality properties for production of finished product for the commercial manufacture.

In the course of research it was established that nutritional and biological values of the finished product, for instance bread, were defined by the compound index including quality and quantity of protein, vitamins and microelements, and also fibers-food fiber that are of great importance in the human nourishment.

It should be mentioned that attempts of producing grain mass with higher value of the compound index lead to decrease of essential values of the grain given, for instance, gluten, that provides for production of the finished product with high organoleptic properties. Thus for production, for instance, of bakery goods, soft wheat with 22-25 % gluten is widely used. Low gluten content in the germinated grain even to 30 % leads to decreasing of organoleptic indices of bread produced from the germinated grain: with low raising rate, hard non-elastic crumb, lack of porosity, and accordingly an unpleasant taste and flavor unusual to accustomed bread. It happens because it is almost impossible to produce bread without inclusion of any dry additives, such as dry gluten, flour etc. of grain with a gluten content of less than 18 %.

The main problem is to provide a specified degree of dispersion of the grain mass. The difficulty is that the produced coarse particles of the grain mass cannot provide for producing of high organoleptic properties of the finished product, and also reduce volume and sorbing properties of food fiber. Besides, the difficulty of producing of fine-dispersed grain mass is in heating of the germinated grain up to 42° C by grinding it on the conventional grinders, that causes denaturation of protein of grain mass and also baking of the grain mass that, of course, does not allow production of finished product with improved taste and high organoleptic properties.

The mentioned technical result is achieved due to the method of producing a grain mass providing: surface cleaning of grain with running water, germination of grain and its crushing, according to the present invention ripe grain with a preserved husk and an undamaged hyaline layer is used, and prior to cleaning with running water, the grain is husked in the anti-stress husker in such a way that a part of grain shell is removed at the rate of 5 % from the original weight of the grain without damaging of hyaline layer of seedcase, germination of grain is carried out in the aquatic environment with the air supply to the germinated grain until a humidity content of no less than 38 % and acidity of the aquatic environment pH = 3,4 -6 and until intensive decrease of gluten content, the grain is milled until production of finely dispersed grain mass at the temperature that does not exceed that of denaturation of protein of the produced grain mass.

According to the present invention, germination time for soft wheat makes up to 36 hours, whereas for hard wheat and rye, up to 48 and 24 hours, correspondingly.

According to the present invention, germination of cleaned grain kernels is carried out a temperature of aquatic environment of 20-40° C

According to the present invention, ripeness time is adjusted by increase or decrease of the temperature of the aquatic environment from 10° C to 40° C.

According to the present invention, to germinate the grain is submerged into the aquatic environment in the proportion of no more than 0,9 l per 1 kg of grain.

According to the present invention, germination of the grain is carried out at the temperature uniform throughout the volume of the germinated grain.

According to the present invention, the aquatic environment is removed just prior to milling and the germinated grain is additionally rinsed with cold potable water.

According to the present invention, the grain is milled up to the size of particles no more than 0,4 mm depending on the kind of the finished product.

According to the present invention, prior to husking the grain is pre-moistened with water, up to 6 % from the weight of the moistened grain and is being removed for 20 minutes.

According to the present invention, the aquatic requirement with the specified properties is used as an aquatic environment.

According to the present invention, wheat, rye, oat, barley, soya, maize grain or their mixture in the proportion specified in the recipe is used as a grain.

According to the present invention, husking of different kinds of cereals and their germination is made separately according to the germination peculiarities of each of the cereals and producing of a grain mass from different cereals in the proportion specified in the recipe is carried out by mixing of the germinated grain of each of the kind while grinding to produce a grain mass, or by mixing of grain masses produced from each of the cereals.

The mentioned above technical result is achieved due to the fact that in a set of equipment for production of grain mass comprising of a module for surface cleaning of grain accomplished as a machinery/device for surface cleaning of grain and a device for cleaning impurities, and a module for grinding of grain designed as, at least, one grinder, and according to the present invention, is additionally supplied with a module for germination of grain designed as, at least one tank with a perforated diaphragm at the bottom and a waste tap for removing of water supplied with air system, the device for surface cleaning of grain of a module for surface cleaning comprises of a husker designed so that removing of particles of the grain shell is carried out without damaging of a hyaline layer and preserve of the germ, a device for rinsing of grain surface, and the grinder designed so that that it is possible to produce a finely dispersed grain mass at the temperature that does not exceed that of denaturation of protein.

According to the present invention, a device for cleaning impurities is designed as a multi-cascade hydrodynamic separator, the first and the following stages of which are made as a overflowing tank so that it is possible to produce a turbulent flow of rinsing water at the first stage, and its last stage is designed as a precipitator with the grain discharge outlet, thus the precipitator enables to produce a laminar flow of rinsing water and installed with a possible joining to the device for rinsing of grain surface.

According to the present invention, the device for rinsing of grain surface is designed as a driving sloping screw installed inside a tube that enables gripping of the sunk grain from the precipitator, in the lower part of the device there is an inlet coinciding with the grain discharge outlet of the participator, and on the upper part there is a discharge window for a rinsed grain with a screened hole underneath to remove rinsed water through a gutter.

According to the present invention, a tank for germination of grain is designed as a transportable tank for a proportional germination of grain with its possible raising and turnover during overloading of the germinated grain.

According to the present invention, the inner surface of the wall of the tank for germination of grain contains marking for volume measuring of the germinated grain charged.

According to the present invention, the module for germination is additionally supplied with a device for holding temperature throughout the total volume of each of its tanks.

According to the present invention, the device for holding temperature is designed as a isothermal tunnel-like chamber.

According to the present invention, the air-supply system designed as a detachable perforated tube that is placed inside the tanks prior to charging of grain to germinate, with a possible connection to the flexible pipe with the condensed air supply.

According to the present invention, the air supply system is designed as a suspended flexible pipe with a point from the condensed air compressor to the germination tank.

According to the present invention, a set of equipment is additionally supplied with charging/discharging devices installed at the place of overloading of grain according to the technological process.

Besides, according to the present invention, the number of grinders in the grinding module is defined according to the volume of grain mass produced from the germinated grain within specified in the technological process time for one kneading of dough produced of the grain mass.

Besides, according to the present invention, with the number of grinders in the grinding module of more than one, it is additionally supplied with a fixed or driven intermediate bin designed with possible simultaneous and/or sequential charging of the grinders.

Besides, according to the present invention, the grinding module is additionally supplied with a belt or screw conveyor for collecting and transportation of the produced grain mass.

Besides, according to the present invention, the module for surface cleaning is additionally supplied with a pre-moistening unit designed as a transportable tank with a suspended mixing device.

The mentioned above technological result is achieved due to the fact that in the grinder comprising of a case with feeding chamber on the top and the outlet for removing of liquid fraction below, a driving feed screw and a grinding device including grids with blade pressure knives in-between mounted on the shaft of the feeding screw, and according to the present invention, each pressure knife blade has cutting heads facing the grids, each of which juts out towards a corresponding grid which it contacts, and a body with pressure planes, while the surfaces of the opposite sides of a blade that face the corresponding grids are turned relative to each other through 180 degrees around a longitudinal axis of blade, and the direction of distance increase between a grid and the pressure plane of the blade body and the direction of rotation of screw coincide from the side of the outlet of the grain mass.

According to the invention, a hole for removing of water is mounted the feeding chamber.

According to the invention, the juts inside the case mounted in the axial direction of the case cylinder to prevent rotation of grain relatively to the chamber.

According to the invention, the grinding device can be accomplished with increase in the number of blade pressure knives and decrease in the size of grid holes, the far the grid is placed from the feed screw, the more number of holes it has.

According to the invention, the grinding device has 2 to 9 grinding stages depending on the specified milling rate of the grain mass.

According to the invention, the grids of the grinding device have holes, the axis of which is placed at 90-45 degree to the surface of the grid.

An important distinctive feature of the declared method of producing of a grain mass is that for germination cleaned ripe grain is used, with the preserved seedcase and undamaged hyaline layer, i.e. sproutable or germintable, and germination is carried out in an aquatic environment with the air supply to the germinating grain, with a moisture content of grain of no less than 38% and with acidity of the aquatic environment of pH = 3,4- 6 before the stage of an intensive decrease of gluten content, when the moisture content in the germinated grain starts dropping lower than 10 % up to 30-50 % from the original content in the given grain, i.e. more than 20 % for the current day. Thus, the following criteria have been followed that allows to stimulate a natural process of grain germination in a safe way, under artificial conditions and control a correlation between the rate of increase of biological properties of grain caused by the germ activization by placing it in a certain environment, and a rate of preserveness of baking properties, defining by the rate of preserveness of gluten by germinated grain. The use of the ripe grain is caused by the fact that freshly harvested grain kernels of the majority of cereals cannot germinate during several weeks or months as it is at the so-called "after-the-harvest ripening". And only after having passed through all the processes of the "after-the-harvest ripening", grain may germinate.

The use of grain with the preserved seedcase and with undamaged hyaline layer is caused by the fact that the main function of a seedcase and a shell is to protect the endosperm and the germ from the outside action. However, during harvesting time and preparation of grain for storing and during husking there is a damage of grain that can be either mechanical or chemical, or microbiological. The above kinds cause damage of a hyaline layer and the so-called waterproof membrane functioning as a biological membrane, i.e. does not let the water inside the endosperm and, thus prevent reserve nutrients from premature damage duringcasual moistening of grain. It is the water-proof membrane that while germinating controls the following processes inside the germ and endosperm: the original moisture that gets inside the kernel above of all should penetrate in the germ part of grain kernel, the germ starts developing.

In case the waterproof membrane is damaged, a typical sign of which is a swollen grain kernel because of absorbing of water, all the processes start developing in the opposite direction: before the germ starts activating and developing biologically, there starts hydrolysis of starch and protein from the endosperm and an aleuronic part of the kernel. Thus, all the nutritional properties of this grain will be different.

While using of germinated grain with preserved seedcase and undamaged hyaline part (waterproof membrane), the biological processes of activization of the germ start before the hydrolysis of starch and protein of the endosperm, i.e. sprouting goes naturally. The finished product made of the grain mass from germinated grain is characterized by an increased protein content in average by 10-20 % (depending on the given raw material and the kind of the compared finished product) by inclusion of a high quality protein of germ and aleuronic part and also by a higher content of irreplaceable amino-acids in protein of the finished product, produced according to the present invention, higher by 10-20 % in comparison with conventional products on the content of main amino-acids as lysine, methionine, threonine, as for tryptophane higher by order.

The finished product produced of grain mass of the germinated grain is characterized by a higher content of a complex of vitamin B group, PP and other microelements (Zn, K, Fe etc.) in average by 20-40 % in comparison with a traditional finished product, and the more important vitamin E naturally containing in the germ in high concentration, more than by 80%. Numerous modem researches prove the important function of food fiber (fibers) for a human organism. Fibers, for instance, provide filling/feeding up, act as sorbents that bind up cholesterol, cancerogens, sugar etc. containing in food, taking them out of organism and decreasing their content in blood. A minimal recommended number of fibers in diet of a grown -up is 30 g per day. It means that to satisfy a need in fibers, a grown -up should, for instance, have 3 kg of conventional white bread. An average level of consumption of bread in many developed countries is 100-200 g per day.

It is well known that conventional white bread (wheat bread) contains of 0,1 - 1 % of fibers, the so-called whole wheat bread, produced from entire ground dry grain kernels, for instance, Graham bread contains 8,6 % of fibers. According to the research data, in the products of grain mass according to the present invention the gluten content amounts to more than 12 % from the total weight of the product.

Producing of grain mass with specified properties according to the invention is provided, firstly, by getting actual germinating of grain up to the required germination stage that is characterized, from the one hand, by maximum increase of biological activity of the germ and the grain kernel, and on the other hand, by preserving of those features and properties of grain (gluten content, starch content, protein content) that provide high organoleptic properties of the finished product made of germinated grain, and secondly, attaining throughout the total volume of grain the same stage of biological activity of grain while germinating that provides stability of the specified properties of grain mass from batch to batch as well as the whole batch of the finished product made of this grain mass.

The main distinctive features of the present set of equipment for producing of grain mass are, firstly, that there is an opportunity for natural germinating of kernels, i.e. to supply air inside a mass of wet grain while sprouting, as one of indispensable conditions in germination is the air presence, that is especially important in the commercial production of the finished product, for instance, of grain bread from germinated grain in the quantity of 5-10 tones per day and more. Secondly, the same throughout the total weight of grain optimal germination conditions allow providing of simultaneity of biochemical processes_during sprouting, i.e. the same and specified degree of biological activity of the main constituents of grain kernel, the germ and the endosperm with a protein aleuronic layer that ensures constant quality of the grain mass as well as the finished product made from this mass.

Fine dispersion of grain mass produced while grinding of germinated grain up to the size of particles of no more than 0,4 mm, especially in a way that prevents heating of the grain mass during grinding to the temperature that causes denaturation of protein of grain mass and its baking, provides getting of high organoleptic properties of the finished product, and increase in volume and absorbent properties of food fiber by a great number of tom fibers produced during grinding.

Pre-cleaning of grain by husking without damaging of a hyaline layer of the seedcase before its germination contributes to increase of fine dispersion of the produced grain mass and directly effects on the improved taste and other organoleptic properties of the finished product as it ruins and removes a wax-like cover of the outer layer of the seedcase generated/made up on the surface of the ripe grain that is not cleaned out while rinsing the grain with water.

The use of a new design of grinder provides production of the specified by technological process degree of dispersion of the produced grain mass and avoid its heating to more than 40° C. This, in its turn, allows to attain the specified properties of the grain mass and preserve its protein constituent and thus increase organoleptic properties of the finished product, and in case of production of pasta products allows producing of them. Besides,the use of the new type of grinder allows to remove additional liquid that is not bound with the germinated grain, to avoid overmoistening of the grain mass that improves organoleptic properties, and in case of production of pasta products, effects on their production from germinated grain.

Thus, the mentioned compound technical result for producing a grain mass from the germinated grain with stable from batch to batch properties, with higher nutritional and biological value and high organoleptic properties in the commercial production, is being achieved.

### BRIEF DESCRIPTION OF THE DRAWINGS

The invention will be better understood from the following description taken in conjunction with the accompanying drawings, including:
- Fig. 1 shows a sketch of a set of equipment for producing of a grain mass;
- Fig. 2 shows sequentially placed anti-stress husker (in cross section), a diagram of a device for cleaning of grain of impurities and a device for cleaning of grain shell;
- Fig. 3 shows a general view of grinder (in cross section);
- Fig. 4 shows a cross section A-A Fig. 3 (a blade pressure knife);
- Fig. 5 shows a cross section B Fig. 4 (cross section profile of pressure knife blade);
- Fig. 6 shows an air supply system (general view);
- Fig. 7 shows an air supply system (top view);
- Fig. 8 shows an isothermal chamber with a tank for sprouting of grain inside and the air supply system (in cross section).

### BETTER VERSION OF IMPLEMENTING THE INVENTION

The data confirming a possibility of implementing of the invention include in the following:

To implement the declared method for producing of a grain mass, soft or hard wheat, rye as well as their mixture can be used as grain, in a proportion specified in the recipe, husking and germinating of which is carried out separately in parallel streams with taking into consideration all the peculiarities of activization of the germ of each of the component.

A qualitative proportion of sprouted wheat and rye kernels may range from 90:10 % to 10:90%. From the point of getting a maximum nutritional value of the grain mass for manufacturing of the finished product, for instance grain bread, of germinated grain and particular, in getting the most qualitative protein and the content of its amino-acids, the optimal preferred proportion of wheat and rye is 70:30 %. Various additives of soy, grain, lentil, sunflower seed, hazel nut and other plants and herbs is admitted.

### DETAILED DESCRIPTION OF THE INVENTION

Ripe grain with the seedcase and undamaged hyaline layer is used as a grain.

A received wheat, rye kernels or their mixture is husked, first in the anti-stress husker with removing of the outer part of seedcase up to 5 % from the original weight of grain and then is treated in a hydrodynamic separator with running water.

To make the outer cleaning/husking in the anti-stress huskers softer, grain can be pre-moistened with water in a quantity up to 6 % (4% is more preferred) based on the total weight of moistened grain and being removed from the water for 10-20 minutes.

The grain cleaned of mineral and organic impurities is submerged into aquatic environment in proportion of no more than 0,9 1 (0,7 is more preferred) per 1 kg of grain. The liquid environment with the properties specified according to the recipe is used s a liquid environment.

To germinate the air is supplied to the grain. Germinating of grain is carried out at the temperature of aquatic environment of 20-40° C that is uniform throughout the whole volume of the sprouted grain until attaining of moisture of no less than 38% and acid environment pH=3,4-6 before the starting of a intensive hydrolysis of starch and protein of the grain. Thus, for instance, duration of germination of soft wheat is 36 hours, 24 hours is more preferable, for hard wheat up to 48 hours, 36 hours is more preferable, for rye up to 24 hours, 14 hours is more preferable.

By "germination" herein is meant a such degree of biological activity of grain kernel wherein the germ is being totally activated and a white spot (a sprout) seen only under a microscope, appears, the kernel absorbs no more than 38 % of moisture and get swollen, there starts developing of the root but intensive hydrolysis of starch of the endosperm and protein of aleuronic layer has not begun yet, i.e. the baking properties of grain do not decrease up to a critical point when the gluten content starts dropping down. This germination stage, for instance for soft wheat is defined by a compound index of attaining moisture content of no less than 38 %, acidity of an aquatic environment pH = 3,4-6, germination time of 19-35 hours at 25-40° C and decrease of gluten no more that by 10% from the original content in the dry grain.

This stage (state) of germinated grain can be defined in a rapid empiric way - by pressing a swollen kernel against two fingers without any efforts, the sprouted kernel brought to a required state is easily become flat and the germ together with wet white mass of the endosperm get out.

At this time the most important index is the content of gluten that defines a possibility of getting the finished product from the germinated grain, for instance, grain bread with high organoleptic properties, - has not decreased considerably. Thus, for a widely used baking flour with gluten of 22-23 %, the end of germination stage is defined by the content of gluten of no less than 20 % that is actually a minimum when the finished product without any additives that improve organoleptic properties of the end product can be used.

The time of readiness of germinated grain can be controlled by increase or decrease of temperature of an aquatic environment from 10-40° C: to slow down the process 10 -12° C water is added, to speed up the process 40° C water is used.

Prior to grinding the aquatic environment is being removed and the germinated grain is additionally rinsed with cold potable water.

Grain mass is produced by grinding of the germinated grain up to the size of particles of no more than 0,4 mm depending on the kind of the end product at the temperature of 40° C that does not exceed that of denaturation of protein of the produced grain mass. A maximum size of particles of grain mass for production of pasta products is up to 0,3 mm, and for production of bakery goods - 0,4 mm.

Producing of grain mass from different kinds of cereals is carried out by mixing in the specified proportion of each of the kind of germinated grain during its grinding or by mixing of grain masses produced from each of the cereals.

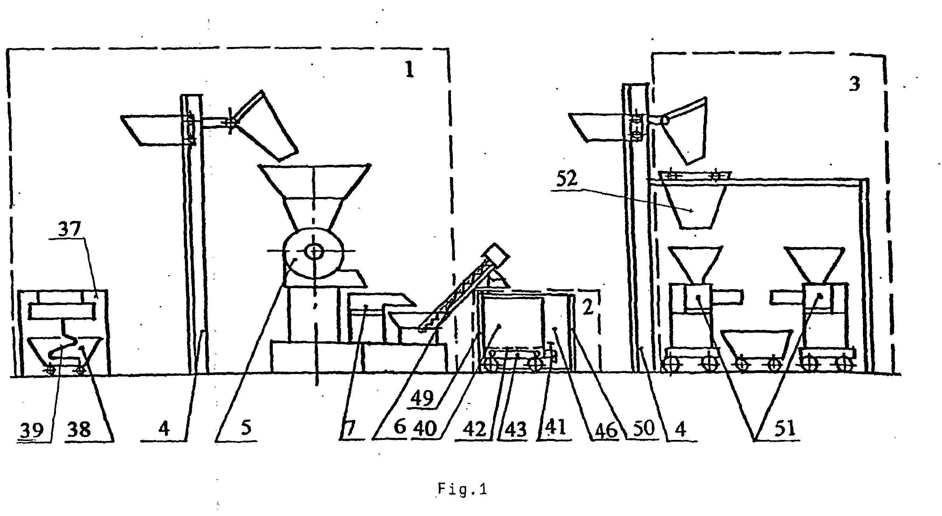

The declared method is carried out with the help of a set of equipment for producing of a grain mass comprising of a module 1 for surface cleaning of grain, a module 2 for germination of grain, a module 3 for grinding of grain and charging/discharging devices 4 (Fig.1).

The module 1 for cleaning of grain is accomplished as an apparatus for surface cleaning of grain, comprising of the husker 5 designed so that the grain shell is cleaned without damage to a hyaline layer of the seedcase and with preserve of the germ, and a rinsing device 6 for surface rinsing of grain, a device 7 for cleaning grain from impurities is mounted just after the husker 5.

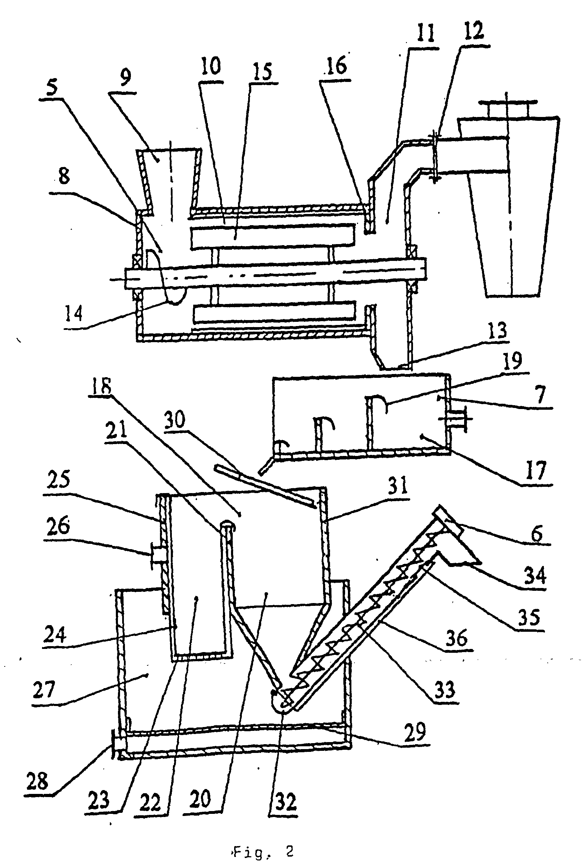

The anti-stress husker 5, for instance, can be designed as a cylindrical case 8 comprising of communicative surge bin 9, working cavity 10 and aspiration cavity 12 for connection to the external aspiration system and outlet 13 (Fig.2). Inside the case of the husker 5 in a traditional way, for instance by means of roll bearings there installed a driving shaft comprising of rigid between each other feeding screw 14, mounted inside the receiving bin 9,and a rotor, the longitudinal blades of which are in the working cavity 10. Between the working cavity 10 and aspiration cavity 11 there is a ring diaphragm 16 ring inside diameter of which is 0,3 ...0,8 of the inside diameter of the working cavity 10.

Inside surface of the working cavity 10 of the husker 5 can be grooved.

Device 7 for cleaning grain from impurities can be designed as a multi-cascade hydrodynamic separator. (Fig.2).

Hydrodynamic separator can present a multi-cascade tank with fall of level from the first cascade 17 to the last cascade 18, the height of a cascade is defined as a height level of water overflow to the next cascade.

The first cascade 17 (the first stage) of the hydrodynamic separator is implemented as a overflowing tank with turbulent water flow for separation of hard mineral impurities, like stone pieces, sand and metal and glass particles. The wall through which rinsing water should overflow is made lower in height in comparison with other walls but higher the level of cut-in branch pipe for water supply to the first cascade 17, and it is supplied with a peek 19 for twisting of water flow caused by water pressure from the cut-in branch-pipe. There can be several stages, for instance 3, as it is shown in our example.

The last stage 18 of the hydrodynamic separator is implemented as a precipitator 20 with laminar flow of rinsing water for separation of light organic impurities and sinking of the rinsed grain. One of the walls 21 of precipitator 20 is lower in height to provide laminar flow of the rinsed liquid with light particles of organic impurities.

To the precipitator 20 from the side of the wall 21 for overflowing of rinsing liquid with light particles of organic impurities there adheres a section 22 with a detachable diaphragm 23 for filtering of water and their removing. The detachable diaphragm 23 can be accomplished as a tank with a solid bottom and at least perforated one wall 24 opposite wall 21. The detachable diaphragm 23 is fixed, for instance at the wall 21 and 25 of section 22. The wall 25 is made solid and has a branch pipe 26 with a perforated diaphragm for a control water remove in case of overloading of the detachable diaphragm 23 with light particles of organic impurities. The branch pipe 26 is mounted lower the height level of wall 21.

The precipitator 20 with section 22 is placed above a water trap 27. The water trap 27 is made as a tank with a branch pipe 28 for removing of wastewater, on the bottom of which there is a detachable water-tub 29 with perforated bottom to control separation of remains of impurities in the wastewater.

The precipitator 20 is supplied with a trap 30 with side and rear walls that functions as a screen switching the turbulent flow of rinsing water with grain from the last but one stage of the hydraulic separator into the laminar one. The trap 30 adjoins the wall 31 of the precipitator above the level of wall 21. The sidewalls are shorter than the length of the foundation of trap that provides a smooth side removing of rinsing water with grain from both sides of the trap 30 into precipitator 20. The lower part of the precipitator 20 is made open and is fixed fast with a sloping tube 32 with the built-in driving screw 33 of the device 6 for surface rinsing of grain.

In the lower part of tube 32 in the joint with the precipitator 20 there is an outlet combined with the discharge hole of the precipitator 20.

In the upper part of tube 32 there is a window 34 for discharging of the rinsed grain.

In the upper part of tube 32 under the window 34 there is a hole 35, covered with a detachable screen for removing of rinsed water.

The hole 35 for removing of rinsed water is placed above a closed groove 36 mounted below the tube 32. The groove 36 is mounted along the tube 32 and fastened, for instance welded, to its outside.

The driving screw 33 is mounted just under the hole for grain discharge of the precipitator 20 so that it is possible to take water together with grain sunk in the precipitator 20 and move it up to the window 34.

The lower face of the tube 32 can be sealed hermetically by means of a conventional cover that can be made, for instance, as a flap-door for preventive cleaning of elements of device 6 for surface rinsing of grain.

The module 1 of the surface cleaning of grain can be additionally supplied with a block 37, as it is shown in our example, made as a transportable tank 38 with a mixing device 39.

The transportable tank 38 for moistening of grain can be designed, for instance, as a standard tank on wheels, called pan_conventionally used in baking industry. Traditional for baking industry dough mixer, for instance type A2XTB produced by Smeljansky machine-building plant (the Ukraine)can be used s a mixing device 39.

Just before the anti-stress husker 5, a well known in baking industry standard pane fork lift, the so-called pane tipper, for instance, produced by Smeljansky machine-building plant (the Ukraine), can be used as the charge/discharge unit 4.

The module 2 for germinating of grain can be made, at least, as one tank 40 for germinating of grain.

The tank 40 for germination of grain can be made, for instance, as a pane or a transportable cubic tank on wheels for portion germination of grain.

Each of the tanks 40 has a waste tap 41 for removing of aquatic environment and perforated diaphragm 42, fixed or detachable, it can close the bottom at the place of the waste tap 41 or can be made as a second bottom as well as a seine fixed on the edges of tank 40.

Each of the tanks 40 has a system for air supply to germinated grain.

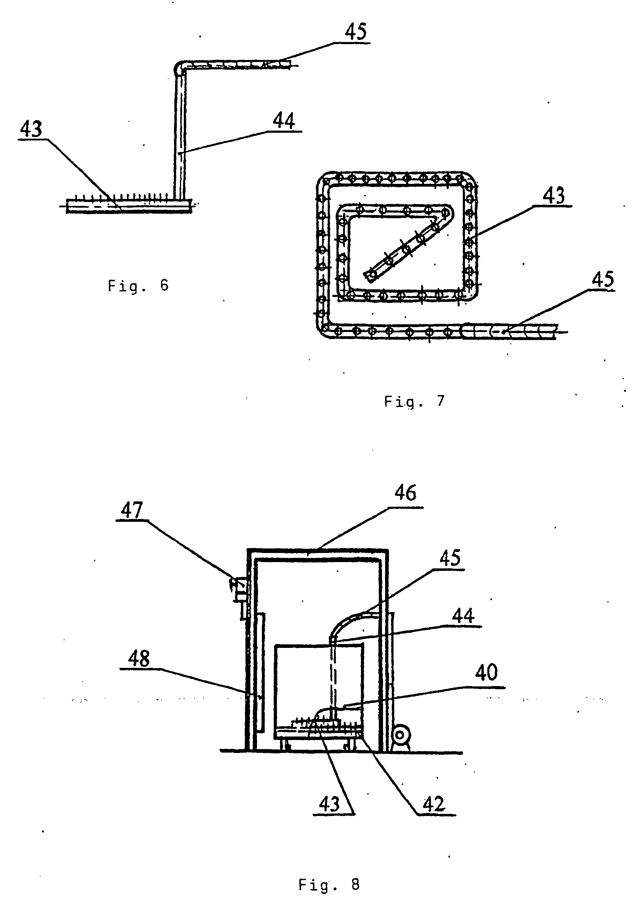

A system of air supply to germinated grain can be made as a detachable perforated tube 43 connected to a flexible pipe for condensed air supply that is placed inside the tank 40 prior to charging/loading of grain (Fig.6).

The perforated tube 43 can be as a horizontal spiral. The perforated tube 43 can have a vertical branch pipe 44 being an adapter between the perforated tube 43 and the flexible pipe 45 (Fig. 7).

The flexible pipe 45 for condensed air supply can be one of the branch pipes of a conventional system of condensed air delivery (Fig. 8) that includes a compressor with a required level of condensed air pressure and the attached flexible core pipe with branch pipes equal to the number of tanks for germination of grain. Each of the branch pipes can have a point with side perforation (it is nor illustrated).

Air supply can be provided, for instance, by a periodical remove of water, wherein the germinated grain is, and with a possible careful stirring by means of the mixing device, or without it.

The module 2 for sprouting of grain can be additionally supplied with isothermal chamber 46 with a thermo-regulator 47 and a heater 48, for instance, wall radiators with warm air supply form bottom to top to hold a certain temperature inside the tanks 40 for germination of grain (Fig. 8).

The isothermal chamber 46 can be tunnel-like, the length of which is chosen so that it is possible to place a required number of tanks 40 (for simplification only one tank is shown) (Fig.8).

The isothermal chamber 46 presents a conventional construction, for instance of II-tunnel, assembled of thermo-insulating panels fixed on posts.

The thermo-insulating panels can be made of two layers of a material with air space between them. Corrosion resistant materials, like plastic, galvanized iron etc. can be used as a material.

The faces of the isothermal chamber 46 are shut with the in- and outlet doors, 49 and 50 correspondingly, produced of the same thermo-insulating panels (Fig.1).

The thermo-insulting panels are fixed between each other and also to the posts in a conventional way, for instance, by means of clamping cramps that allow to make the chamber collapsible, of a required length and easy to transfer in case of necessity.

The isothermal chamber 46 can be assembled and fixed just on the floor, on which inside it there can be made directors for the wheels of the tank 40 fixed to the floor.

Widely spread wall radiators 48 with warm air supply form bottom to top are conventionally mounted inside the isothermal chamber 46 and the thermosensor 47 with a brought out regulator of temperature span that controls the work of radiators for holding the temperature inside the chamber 46 according to the required temperature span of the technological process. Besides, inside the isothermal chamber 46 a conventional system of condensed air supply to the tanks 40 germinated grain can be installed, with a brought out compressor and a number of derivations made as flexible branch pipes 45 of a certain length equal to the number of tanks that can be placed inside the isothermal chamber.

The module 3 for milling of grain made as at least one grinder 51. To be obvious two mills were used. In case of use of two or more mills, the number of which is calculated according the required capacity and a required period for production of one batch of sprouted grain, it is possible to include an intermediate bin 52 in a set of equipment, for instance one driving bin for sequential feeding of grinders as it is shown in our example.

The charging/discharging device 4, for instance, as a fork pane-tilter, can be placed before the intermediate bin 52.

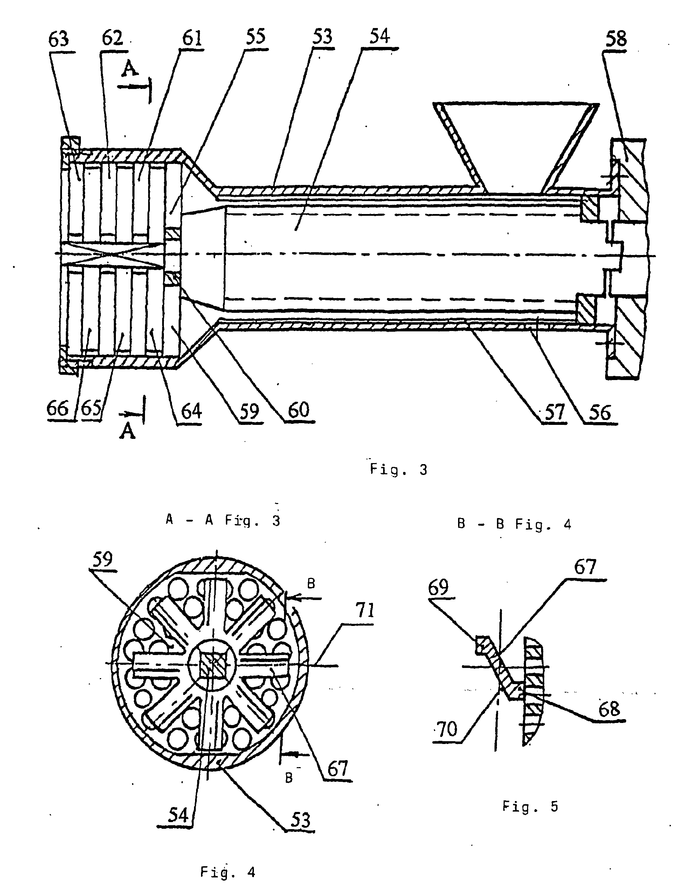

The grinder consists of a case 53 with a feeding chamber, the driving screw 54 and a grinding device 55 (Fig. 3).

The case 53 of the grinder is made as a horizontally placed cylinder, one edge of which can be fastened with the case of the drive unit of feeding screw. In the upper part of the case 53 just next to the place of its joint with the case of the drive unit, there is a feeding chamber, and in the lower part of the case 53 opposite the feeding chamber there is a hole 56 for removing of extra liquid fraction produced while milling of germinated grain.

A swing part the case 53 can have a socket wherein a milling device 55 is placed.

Inside the case 53 there are lugs 57 made relative to the case that prevent from rotation of grain. The lugs 57 can be made with a section, for instance as triangular prisms parallel to the case axis, i.e. place towards axial direction of the cylinder of the case 53 to prevent rotation of grain relative to the case while the griner 51 is running.

On swing end the feeding screw 54 has a stem for mounting of blade pressure knives of the grinding device 55. The stem of the driving feed screw can have a section of any kind that can provide hard joining of blade pressure knives with the stem, for instance square, hexagon etc. The other end of the feeding screw 54 is fastened to the output shaft of the drive unit 58 by any standard means, like, tooth-type coupling, jaw clutch etc., or by toothed joining of the shafts etc.

The driving feed screw 54 can be mounted inside the case 53 in a conventional way by standard means, like roll bearings mounted, for instance, at the joint of the screw with the output shaft of the drive unit 58 and in place of mounting of a support grid 59. A bush 60 fastened to the stem on which the support grid 59 is easily put on can function as roll bearing. The driving feed screw 54 is placed contra-rotating with the case 53 and the output shaft of the drive unit 58.

The grinding unit 55 consists of sequentially mounted grids 59, 61, 62 and 63, and blade pressure knives, for instance 64, 65 and 66, between them. The support grid 39 is placed first from the screw. Each of the grids, 59, 61, 62 and 63 is placed in a socket so that it cannot move, i.e. it is supplied with, at least, one flat contacting with the segmental lug of the socket. In our example each of the grids has two flats, one of which is on the top, and the other on the bottom (Fig.4). At the same time, each of the grids 61, 62 and 63 is put on the stem with a gap, allowing free rotation of driving feed screw with the stem.

Each of the grids 59, 61, 62 and 63 is made as a disk with a through hole.

Each of the blade pressure knives is made as a blade 67 fixed on the nave, cutting surfaces of which exceed the nave bounds.

The number of blades 67 can be different and vary, for instance, from 3 to 12, depending on the installation of a certain pressure knife in the grinding device 55. The first pressure knife 64 is placed between the support grid 59 and the following it grid 61, and can have, for instance, three blades; the second knife 65 placed between grid 61 and grid 62, can have 8eight blades, the third knife 66 that has, for instance, 12 blades is placed between the grids 62 and 63, i.e. a blade pressure knife can be made with the increase of number of blades, and as for the number of wholes, the far it moving off the feeding screw 54 the more holes it has.

The section of blades 67 can be rectilinear, stepwise rectilinear, curvilinear etc.

Each of the blades 67 has cutting heads 68 and 69 facing the corresponding grids jutting out towards a corresponding grid and contacting it, and a body with a pressure plane 70 (Fig. 5).

The pressure plane 70 is placed at the angle of 1-45 degrees to the plane of the corresponding grid.

Surfaces of the opposite sides of the blades 67 are facing to the corresponding grids, and are turned relative each other through 180 degrees around a longitudinal axis 71 of the blade. The direction of increase of distance between a corresponding grid and the pressure plane of blade 67 and rotation of the feed screw 54 at the side of the outlet of grain mass, coincide.

A set of equipment for producing of a grain mass, functions in the following way:

Ripe grain with seedcase and undamaged hyaline layer is placed into the transportable tank 38, for instance, a pan of the pre-moistening block 37, the grain is moistened, for instance, with water in the quantity of 5 % based on the total weight of the moistened grain and is stirred by means of the mixing device 39, for instance, of a standard dough mixer for 10-20 minutes for uniform moistening.

Then the moistened grain is loaded into the surge bin 9 of the hull 5 by means of charging/discharging device 4.

The moistened grain charged into surge bin 9 of the husk 5 goes into the working cavity 10 and fill the bin as much as the diaphragm 16 covers its section. Rotating longitudinal blades 15 cause a layerwise movement of grain in the space between the blade 15 and the case 8 of the working cavity 10 and simultaneously by means of centrifugal forces that press the grain to the case 8. Under such a regime by means of friction of kernels there occurs husking, i.e. taking off the "husk" that is a part of the outer layer of grain seedcase, called epidermis, in quantity up to 5 % based on the original weight of grain. The grain does not strikes against the case 8 that provides safety and integrity of the most important structural constituents of grain: the germ and the seedcase with its hyaline layer.

The movement along the working cylinder carried out by means of fluidity of grain as well as by the feeding screw 14.

After coming from the diaphragm 16, the grain with the separated during husking parts of the epidermis comes to the aspiration cavity 11, wherein the cleaned grain through the outlet 13 comes into device 7 for cleaning the grain from impurities, the lighter particles are sucked out with a ventilator and through the aspiration cavity 12 come into the cyclone.

In the device 7 for cleaning the grain from impurities is rinsed and cleared from mineral impurities, like sand, stone particles, and also organic impurities, like remains of stalks/pedicels etc.

Entering the first cascade 17 of the multi-cascade tub of the hydrodynamic separator the grain comes into the turbulent flow of the rinsing liquid, like water, created by means of the peak 19. Sand particles and other heavy particles sink on the tub bottom, the grain with the water flow of the first cascade 17 is coming out to the second cascade, the third etc.

Then by means of the trap 30 functioning as a screen that holds up a turbulent state of water, the grain from the turbulent flow comes into the tub of the last cascade 18 with the laminar flow of rinsing water.

In the precipitator 20 of the last cascade 18 the grain sinks on the bottom of the tub and light particles of impurities, for instance, organic, float to the surface and overflow to the section 22 with the detachable diaphragm 23 for collecting of impurities.

The sunk in the precipitator 20 grain through a discharge hole in its bottom comes together with the rinsing water inside the tube 32, wherein it is carried away with the driving screw 33 and moved upward along the tube 32 to the discharge window 34, and is additionally rinsed with entrapped water, moreover the rinsing water together with grain attaining the hole 35 for removing of rinsed water that is covered with screen, is removed down the groove 36 to the tub 29 of the water trap 27, and the rinsed grain through the discharge window 34 comes to the tank 40 of module 2 for germination of grain.

The remains of impurities are separated in the tub 29, after which the rinsing water is removed through a branch pipe 28 either for the next cleaning and recycling, or into a sewer system.

Moreover, light particles of organic impurities floating on the water surface of the precipitator 20, are carried away with the laminar flow of water that with light particles of organic impurities overflows to the section 22 wherein they accumulate on the detachable diaphragm 23, and the rinsing water is filtered and comes to the water-trap 27. To provide overflowing of rinsing water from the precipitator 20, prior to starting-up of the husker 5, there fixed such a pressure of rinsing water supply to the first stage 17 of the hydrodynamic separator under which, firstly, there is a turbulence on the first stage 17, and secondly a water level in the precipitator 20 while running of the driving screw 33 provides filling of the precipitator 20 and flowing of rinsing water over the wall 21 to section 22.

As far as detachable diaphragm 23 is filled with organic impurities its holes get blocked, filtering of rinsing water is getting hard and its level in the section 22 is gradually get increased; on reaching the level of branch pipe 26 the rinsing water starts being filtered through the diaphragm of the branch-pipe 26 and flowing out of it to the water trap 27. This is a signal for shutting down the husker 5 and demounting of diaphragm 23 to clean it from the impurities, whereupon the cleaned diaphragm is mounted in section 22 and the husker 5 is started up.

Thus, the grain is efficiently but carefully gets cleaned from mineral and organic impurities, gets rinsed and totally separated from them.

The cleaned and rinsed grain in the tank 40 is filled up with water in a proportion up to 0,9 1 per 1 kg of grain.

Potable water, activated water, water with extracts of different plants etc., whey and the like can be used as an aquatic environment with properties specified according to the recipe, the use of which is according to the technological regulations to improve physical properties of the future product, for instance dough, and correspondingly to increase porosity, for instance, of bread produced of this dough. Moreover, to increase a biological value of grain it is possible to add some nutrients (food additives, salt) to the aquatic environment. A specific composition of aquatic environment, its volume, temperature and duration of germination of grain is defined by the technological process. In our example the potable water was used.

A number of tanks 40 required for germination of grain is calculated based on the total volume of the manufactured finished product from grain mass for a certain day (shift) taking into consideration the consumption rate of dry grain per unit of the finished product.

Prior to charging of cleaned and rinsed grain into the tank 40, a perforated tube 43 of air-supply system is installed with the branch pipe 44 for its following connection to the flexible pipe 45 for condensed air supply from the compressor.

The prepared tanks 40 for germination of grain are placed inside the isothermal chamber 46.

The grain is germinating for 24 hours inside the isothermal chamber 46 at the constant over the total volume of grain temperature of 35-40° C until it gets the required germination stage. This germination stage is defined by a compound index of grain moisture of no less than 38 % and acidity of an aquatic environment pH= 3,4 -6 and decrease of gluten by 10 % from its original content in in the dry grain.

This stage (state) of germinated grain can be defined in a rapid empiric way - by pressing a swollen kernel against two fingers without any efforts, the sprouted kernel brought to a required state is easily become flat and the germ together with wet white mass of the endosperm get out.

Air is supplied to provide germination, for instance, either the water containing grain is periodically removed and the grain is stirred carefully, for instance, by means of a mixing device, or the air is supplied to the tank 40 by means of air supply system.

In the isothermal chamber 46 with the temperature span from 25 - 40° C there is high relative moisture that promotes to fast germination in all the layers of grain, inside the tank, including the upper layers, under a relatively uniform air flow throughout the total volume of the germinating grain.

While using of condensed air supply system to the tanks 40 with the germinating grain and water the following steps are to be made: the compressor is switched on, the branch pipe 44 of the air supply system to the tank 40 is connected to the flexible pipe 45 that can be one of the derivatives, tap of the branch-pipe 44 is opened. Condensed air under specific pressure through the flexible pipe 45 and the branch-pipe 44 is supplied to the perforated pipe 43 placed inside the grain mass whereupon it is uniformly carried into germinated grain, to secure germinating. The pressure of condensed air supply fixed higher than the ambient pressure.

The flexible pipe 45 with metal point, submerged into germinated grain up to the bottom of tank 40, is connected to the standard compressor of condensed air to make condensed air system simple

As soon as the grain in the required germination stage, the surplus water if remained in the tank 40 is removed through the waste tap 41, germinated grain is hold up by a perforated diaphragm 42.

The germinated grain is then cleaned with cold portable water from the remaining of acid aquatic environment, in which it was germinated.

Then the germinated grain is charged into the intermediated bin 52 of module 3 for grinding. In our example two grinders 51 are used. For instance, by means of fixed two-sleeve or driven one-sleeve intermediate bin 52 as it is shown in our example, the charging chambers of two grinders 51 are sequentially filled with the grain.

The grain charged with the driving feed screw 54 is carried to the first stage of grinder 51 comprising of support grid 59, blade pressure knife 64 and grid 61. At this stage in place of contact of the cutting head 68 of blade pressure knife 64 with the support grid 59 there is cutting of grain kernels into coarse particles that by means of pressure plane 70 are then pressed through the holes of grid 61 to the second stage made up by the grid 61, the blade pressure knife 65 and the grid 62. Moreover, in place of contact of the cutting head 69 and the grid 61 coarse particles are additionally ground. Coming form the first stage of grinding the coarse particles in place of contact of cutting head 68 of blade pressure knife 65 with the grid 61 are ground into fine particles that are then pressed into the third stage wherein in place of contact of the working head 68 of blade pressure knife 66 and the grid 62 are ground to finer particles. Moreover, in place of contact of the cutting head 69 with the grid 63 the grain particles are additionally milled.

Thus, a stable movement of the produced mass from one stage to another is provided that allows to avoid slipping of grain mass inside the grinder and heating of grain mass higher than 40° C. Besides, a blade knife can be mounted inside the grinding device in different sideways as whenever it placed the inter-location of planes of the blades of pressure knife to the corresponding grids will be the same.

In our example a three-stage grinder is shown. The number of stages is defined depending on the required rate of grinding.

The produced grain mass from the grinder 51 comes into the surge bin, for instance into a standard pan, as it is shown in our example, or on belt or screw conveyor (it is not illustrated) for the following transference to the technological place of processing of it into the finished product.

### EXAMPLE 1.

To produce finished product, for instance, from 5000 kg of grain bread it is necessary to take 3700 kg of the given grain based on rate of output of 135% to the weight of the grain given.

Ripe grain of soft wheat, for instance "Ideal" of Dobruja region (Bulgaria), with undamaged seedcase and undamaged hyaline layer, was used as grain. The original moisture was 10,2 % and gluten content was 21,6 %.

Incoming wheat grain in the quantity of 3700 kg is gradually filled into the pan of the pre-moistening block 37 per 100 kg by means of three return pans. In each of the pans the grain is uniformly moistened with 5 1 of water, spraying it through the surface of grain, whereupon the grain is being stirred for 10 minutes by means of the mixing device 39, for instance of the standard dough mixer. Then the grain is being removed for 10 minutes more, and let it rest. While removing of water fron the grain in the first pane the same procedure is done in the next pane.

After the grain has been removed from the water it is filled into the bin of the husker 5 from the first pane of the pre-moistening block 37 by means of the pane-tilter 4, where it is husked in the anti-stress husk with remove of the outer part of seedcase and preserving of a hyaline layer of the seedcase and the germ. After cleaning of the grain there remained 55 kg of removed particles that with moistening of the grain and increased moisture content of the removed particles, makes 1,49 % from the total weight of the grain taken.

Being husked in the husker 5 the grain is continuously taken into the hydrodynamic separator 7, wherein it is treated with the turbulent water flow with precipitation of hard particles of mineral impurities in grain (stone fragments, sand, metal and glass particles). The cleaned from mineral impurities grain and water are carried to the precipitator 20 with the laminar water flow that entraps light organic particles (hay stalks, shells of ears, grass seeds and the like) and takes them away, and flows over into the section 22.

The grain cleaned from mineral and organic impurities sinks on the bottom of the precipitator 20 wherein together with water is carried out with the driving screw and is intensively rinsed with water by rising in the tube of device 6 for surface cleaning of grain. Used rinsing water is removed through the screen by means of the groove 36 into the water trap 27.

The rinsed cleaned water through the discharge hole of device 6 for cleaning of grain surface is taken into the tanks 40 of module 2 for germination of grain. The grain is batched by volume according to the quantity required for production of the finished product. In this example per one baking in a rotation oven we got 500 buns of grain bread of 400g by weight or 200 kg of grain bread, i.e. there are 25 baking procedures that require 25 tanks for germinating of grain. Each of the tanks 40 is filled with 150 kg of the taken cleaned grain measuring its volume by the marks on the walls of the tank 40.

The grain in the tank 40 for germinating is filled with warm portable water (40° C) in quantity equal to 105 liters, that was calculated from the following ratio: 0,71 per 1 kg of grain.

The tanks 40 with the grain with a duration 30 minutes are placed inside the tunnel -like isothermal chamber 46 wherein the temperature is being automatically hold in range of 35-40° C.

To secure germination, the condensed air through the flexible pipe 45 is carried to the bottom of the tank. The germination is carried out for 19 hours until the grain has the moisture content of 45% and acidity of an aquatic environment pH=4,2, the gluten content decreased by 7 % in comparison with the initial one, and made 20,1 %.

In 19 hours after placing of each of the tanks 40 for germinating of grain with a 30 minutes interval, the tanks are wheeled out from the isothermal chamber 46, the remained 10 liters of water is removed from the tank 40, germinated grain is rinsed with cold water from the remains of acid environment. After that the germinated grain is recharged into the intermediate bin 52 and charged into two running parallel grinders 51 that grind every batch of the germinated grain for 25 minutes, whereupon the grinders are stopped for 5 minutes and started up again to grind the grain from the other tank 40.

The weight of the germinated grain in each of the tank 40 made 245 kg with 45 % moisture. After grinding the quantity of the produced grain mass made 240 kg with a maximum size of particles of no more than 0,4 mm, while grinding of 5 liters of liquid fraction was trapped out.

Every 240 kg of the produced grain mass is taken into the pan for kneading of dough for grain bread according to the recipe with its following cutting, forming, standing and baking that results in production of 5000 kg of bread was produced, with nice flavor of baked sprouted grain and unique taste of baked grain fibers, elastic and porous crumb of light-brown color, nice gold-brown crust and high raise of bread for 25 baking procedures.

Sample research of the grain bread produced in such a way obtained in the accredited laboratory in Sophia, showed the following results of attaining of the compound index: the protein content of 8,9 % with the improved amino-acid composition; higher content of vitamins B1, B6, PP and E (up to 0,4 mg per 100 g of the product) and microelements, like Zn, Cu, K, chrome etc.; the fiber content made 12,2 %.

### EXAMPLE 2.

Like in example 1 under the same production conditions 5000 kg of rye-wheat bread is produced in a 1:2 proportion of rye and wheat, for production of which 3700 kg of grain is needed in the following proportion, like 1200 kg of rye and 2500 kg of wheat. Taking into consideration the duration of germination of rye and wheat, their surface cleaning and rinsing, the germination is carried out in two parallel production lines. On the basis of preliminary obtained empiric data the following temperature span in the corresponding isothermal chambers is fixed: for wheat -35- 40° C and 25-30° C for rye, so that duration of germination of wheat is 19 hours, and for rye - 14 hours.

In this case, the surface cleaning and rinsing of grain are made by means of the same set of equipment: first for the wheat and then for the rye, as with taking into consideration the capacity of the husker and the device for rinsing of grain of 500 kg per hour, duration of cleaning and rinsing made 5 hours. The tanks for germinating of wheat per 200 kg in each were placed in the corresponding isothermal chamber with a 30 minutes interval for 5 hours (12 tanks in total per 200 kg of grain and one tank with the remains of 100 kg of wheat). After cleaning and since the beginning of germinating of wheat, the rye began being cleaned on the same set of equipment, the tanks for germinating of rye with an hour interval were placed into another isothermal chamber (6 tanks in total per 200 kg of rye were being continuously loaded for 3 hours, filled up with warm water and wheeled into isothermal chamber for germination with an hour interval, i.e. for 6 hours in total).

Thus, per one shift (8 hours) of the husker and the device for cleaning of grain surface, we succeed in preparing all the tanks for germinating of the given amount of wheat and rye. It should be mentioned that in case a production shift is doubled (10 000 kg of rye-wheat grain bread from 7400 kg of grain in the same proportion) two independent modules of the outer cleaning is needed, in one of which the rye would have being prepared for 6 hours and in the other, - the wheat for 10 hours (taking into consideration 8-hours shift, the second module of the surface cleaning would have been processing the wheat for 8 hours, and the rest of the wheat could have been processed for 2 hours on the free first module after processing of the rye).

In the present example the selection/picking out of time ratio allowed in 19 hours after filling of the first tank with wheat and after 14 hours after filling of the first tank with rye to start simultaneous grinding of their contents. The grinding was carried out on three mills, two of which were grinding the wheat simultaneously, and the rest was grinding the rye.

Further, two grinders were filled with wheat from the first tank, and the third grinder was filleded with rye from the first tank with rye. The output of wheat grain mass and rye grain mass was weighed separately and carried to the same pan for kneading in the total volume of 240 kg in a proportion specified in the recipe. In 30 minutes after grinding of the germinated wheat kernels in the first tank, the second tank is taken out of the isothermal chamber and grinding of wheat is continued with two grinders, by this moment in the first tank with the rye a half of nonground germinated grain is left.

Thus, for one hour from two tanks with the germinated wheat grain and one tank with the rye by means of three grinders, three pans of the grain mass of rye and wheat were sequentially produced in a 1:2 proportion. Baking of grain bread in this very example is carried out in two rotation ovens for 30 minutes in each.

As a result, the finished product was produced, i.e. rye-wheat grain bread in a quantity of 5000 kg with high organoleptic properties, similar to the one in example 1 with difference in crumb and crust color (they have brownish tint) and rich flavor and taste.

It should be mentioned that the higher protein content and more qualitative amino-acid composition as well as increase in gluten content up to 19 %, was obtained in the second example.

### APPLICIBILITY

The invention can be used for production of grain mass in the commercial production from germinated grain (brought up to the initial stage of germination) with stable from batch to batch given properties, with higher nutritional and biological value and high organoleptic properties and the following products produced out of it, like pasta products, bread, including baking goods (burger buns, baguettes, bread sticks, pettes, ring-shaped cracker, croissants, gingerbread, etc.

## Claims

1. A method of producing of a grain mass, wherein the surface cleaning of grain with running water, germination of grain and its husking, differing in that ripe grain with a preserved husk and an undamaged hyaline layer is used, and prior to cleaning with running water, the grain is husked in the anti-stress husker in such a way that a part of grain shell is removed at the rate of 5 % from the original weight of the grain without damaging of hyaline layer of seedcase, germination of grain is carried out in the aquatic environment with the air supply to the germinated grain until a humidity content of no less than 38 % and acidity of the aquatic environment pH =3,4 -6 and until intensive decrease of gluten content, the grain is milled until production of finely dispersed grain mass at the temperature that does_not exceed_ that of denaturation of protein of the produced grain mass.

2. The method of producing of a grain mass of claim 1, differing in that the germination time for soft wheat grain makes up to 36 hours, whereas for hard wheat and rye up to 48 and 24 hours, correspondingly.

3. The method of producing of a grain mass of claim 1, differing in that germination of cleaned grain kernels is carried out at a temperature of aquatic environment of 20-40° C.

4. The method of producing of a grain mass of claim 1, differing in that ripeness time adjusted by increase or decrease of the temperature of the aquatic environment from 10 - 40° C.

5. The method of producing of a grain mass of claim 1; differing in that to germinated the grain is submerged into the aquatic environment in the proportion of no more than 0,9 l per 1 kg of grain.

6. The method of producing of a grain mass of claims 1-5, differing in that germination of grain is carried out at the temperature uniform through the total volume of germinated grain.

7. The method of producing of grain mass of claim 1, differing in that aquatic environment is removed just prior to grinding and the germinated grain is additionally rinsed with cold potable water.

8. The method of producing of a grain mass of claims 1 and 8, differing in that the germinated grain is milled up to the size of particles of no more than 0,4 mm depending on the kind of the finished product.

9. The method of producing of a grain mass of claim 1, differing in that prior to husking the grain is pre-moistened with water, up to 6 % from the weight of the moistened grain and is being removed for 20 minutes.

10. The method of producing of grain mass of claim 1, differing in that the aquatic environment with the specified properties is used as an aquatic environment.

11. The method of producing of a grain mass of claim 1, differing in that wheat, rye, oat, barley, soya, maize grain or their mixture in the proportion specified in the recipe is used as grain.

12. The method of production of grain mass of claim 1, differing in that husking of different kinds of cereals and their germination is made separately according to the germination peculiarities of each of the cereals and the producing of grain mass from different cereals in the proportion specified the recipe is carried out by mixing of the germinated grain of each of the kind while grinding to produce a grain mass or by mixing of grain masses produced from each of the cereals.

13. A set of equipment for producing of a grain mass comprising of a module for surface cleaning of grain accomplished as a machinery/device for surface cleaning of grain and a device for cleaning impurities, and a module for grinding of grain designed as, at least, one grinder, differing in that is additionally supplied with a module for germination of grain designed as, at least one tank with a perforated diaphragm at the bottom and a waste tap for removing of water supplied with air system, the device for surface cleaning of grain of a module for surface cleaning comprises of a husker designed so that removing of particles of the grain shell is carried out without damaging of a hyaline layer and preserve of the germ, a device for rinsing of grain surface, and the grinder designed so that that it is possible to produce a finely dispersed grain mass at the temperature that does not exceed that of denaturation of protein.

14. The set of equipment for producing of a grain mass of claim 13, differing in that a device for cleaning impurities is designed as a multi-cascade hydrodynamic separator, the first and the following stages of which are made as a overflowing tank so that it is possible to produce a turbulent flow of rinsing water at the first stage, and its last stage is designed as a precipitator with the grain discharge outlet, thus the precipitator enables to produce a laminar flow of rinsing water and installed with a possible joining to the device for rinsing of grain surface.

15. The set of equipment for producing of a grain mass of claim 13, differing in that the device for rinsing of grain surface is designed as a driving sloping screw installed inside a tube that enables gripping of the sunk grain from the precipitator, in the lower part of the device there is an inlet coinciding with the grain discharge outlet of the participator, and on the upper part there is a discharge window for a rinsed grain with a screened hole underneath to remove rinsed water through a gutter.

16. The set of equipment for producing of a grain mass of claim 13, differing in that a tank for germination of grain is designed as a transportable tank for a proportional germination of grain with its possible raising and turnover during overloading of the germinated grain.

17. The set of equipment for producing of a grain mass of claims 13 and 16, differing in that the inner surface of the wall of the tank for germination of grain contains marking for volume measuring of the germinated grain charged.

18. The set of equipment for producing of a grain mass of claim 13 differing in that the air-supply system designed as a detachable perforated tube that is placed inside the tanks prior to charging of grain to germinate, with a possible connection to the flexible pipe with the condensed air supply.

19. The set of equipment for producing of a grain mass of claim 13 differing in that the air supply system is designed as a suspended flexible pipe with a point_from the condensed air compressor to the germination tank.

20. The set of equipment for producing of a grain mass of claim 13 differing in that the module for germination is additionally supplied with a device for holding temperature throughout the total volume of each of its tanks.

21. The set of equipment for producing of a grain mass of claim 20 differing in that the device for holding temperature is designed as a isothermal tunnel-like chamber.

22. The set of equipment for producing of a grain mass of claim 13 differing in that a set of equipment is additionally supplied with charging/discharging devices installed at the place of overloading of grain according to the technological process.

23. The set of equipment for producing of a grain mass of claim 13 differing in that the number of grinders in the grinding module is defined according to the volume of grain mass produced from the germinated grain within specified in the technological process time.

24. The set of equipment for producing of a grain mass of claim 13, differing in that with the number of grinders in the grinding module of more than one, it is additionally supplied with a fixed or driven intermediate bin designed with possible simultaneous and/or sequential charging of the grinders.

25. The set of equipment for producing of a grain mass of claims 13 and 24 differing in that the grinding module is additionally supplied with a belt or screw conveyor for collecting and transportation of the produced grain mass.

26. The set of equipment for producing of a grain mass of claim 13, differing in that the module for surface cleaning is additionally supplied with a pre-moistening unit designed as a transportable tank with a suspended mixing device.

27. The grinder comprising of a case with feeding chamber on the top and the outlet for removing of liquid fraction below, a driving feed screw and a grinding device including grids with blade pressure knives in-between mounted on the shaft of the feeding screw, and differing in that, each pressure knife blade has cutting heads facing the grids, each of which juts out towards a corresponding grid which it contacts, and a body with pressure planes, while the surfaces of the opposite sides of a blade that face the corresponding grids are turned relative to each other through 180 degrees around a longitudinal axis of blade, and the direction of distance increase between a grid and the pressure plane of the blade body and the direction of rotation of screw coincide from the side of the outlet of the grain mass.

28. The grinder according of clam 27 differing in that a hole for removing of water is mounted the feeding chamber.

29. The grinder according of clam 27 differing in that the juts inside the case mounted in the axial direction of the case cylinder to prevent rotation of grain relatively to the chamber

30. The grinder according of clams 27 and 30 differing in that the grinding device has not less than 2 grinding stages depending on the specified milling rate of the grain mass.

31. The grinder according of clam 27 differing in that the grinding device can be accomplished with increase in the number of blade pressure knives and decrease in the size of grid holes, the far the grid is placed from the feed screw, the more number of holes it has.

32. The grinder according of clam 27 differing in that the grids of the grinding device have holes, the axis of which is placed at 90-45 degree to the surface of the grid.
